Europäisches Patentamt

European Patent Office

Office européen des brevets

(19)

(11) Veröffentlichungsnummer: **0 179 963**
**A1**

# (12) EUROPÄISCHE PATENTANMELDUNG

(21) Anmeldenummer: **84710033.6**

(22) Anmeldetag: **27.10.84**

(51) Int. Cl.⁴: **H 02 K 1/14**, H 02 K 1/18, H 02 K 23/04

(43) Veröffentlichungstag der Anmeldung: **07.05.86**
**Patentblatt 86/19**

(84) Benannte Vertragsstaaten: **AT BE CH DE FR GB IT LI LU NL SE**

(71) Anmelder: **ROBERT KRUPS STIFTUNG & CO. KG., Heresbachstrasse 29, D-5650 Solingen 19 (DE)**

(72) Erfinder: **Mahlich, Gotthard Ch., Dipl.-Ing., Auf dem Kämpchen 29, D-5650 Solingen 11 (DE)**
Erfinder: **Schubert, Klaus, Augustin-Wibbelt-Strasse 12, D-4250 Bottrop (DE)**

(74) Vertreter: **Buse, Karl Georg, Dipl.-Phys. et al, Patentanwälte Dipl.-Phys. Buse Dipl.-Phys. Mentzel Dipl.-Ing. Ludewig Unterdörnen 114, D-5600 Wuppertal 2 (DE)**

(54) **Elektromotor zum Antrieb von Geräten, insbesondere von Haushaltgeräten.**

(57) Bei einem Elektromotor zum Antrieb von Geräten ist der Rotor (22) des Motors von wenigstens zwei gegenüberliegend angeordneten Magneten (10) gebildet, wobei die Magnete (10) ihrerseits an der Innenseite eines Rückschlußringes (14) anliegen. Zur Vereinfachung des Motors und dessen Montage ist der Rückschlußring (14) aus magnetflußleitendem Strangmaterial (13, 41) in wenigstens zwei Windungen (17) um die Magnete (10) gewickelt.

EP 0 179 963 A1

**PATENTANWÄLTE**

zugelassene Vertreter beim Europäischen Patentamt

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 557022/23/24 · Telex 8591606 wpat

0179963

37                                   **5600 Wuppertal 2, den**

Kennwort: "Rückschlußwickel"


Robert Krups Stiftung & Co. KG,
Heresbachstr. 29, 5650 Solingen

---

Elektromotor zum Antrieb von Geräten, inbesondere von
Haushaltgeräten

---

Die Erfindung betrifft einen Elektromotor zum Antrieb
von Geräten, insbesondere von Haushaltgeräten, wobei
der Rotor des Motors von wenigstens zwei gegenüberliegend angeordneten Magneten unterschiedlicher Polarität
umfaßt ist und die Magnete ihrerseits an der Innenseite
eines Rückschlußringes anliegen, dessen Dicke in bezug
auf den Magnetfluß ausgelegt ist.

Sowohl in der Industrie als auch im Haushalt werden
zum Antrieb von Geräten in großer Zahl Elektromotoren
eingesetzt, wobei für viele Anwendungsbereiche Motoren
kleiner Leistung in Frage kommen, die in bezug auf
technische und wirtschaftliche Anforderungen möglichst
optimal ausgelegt sein sollen. Wegen der geringen
Abhängigkeit der Drehzahl von der Belastung und der
guten Steuerungsmöglichkeit der Drehzahl hat man in
letzter Zeit zunehmend Gleichstrom-Nebenschlußmotoren
verwendet, bei denen das Erregerfeld nicht auf elektromagnetische Weise, sondern durch Permanentmagnete erzeugt
wird. Dabei werden wenigstens zwei Magnete einander gegenüberliegend angeordnet und an einem die Magnete schließend umfassenden Rückschlußring festgelegt. Dieser Rückschlußring besteht entweder aus einem Eisenrohr oder aus einer zu einem Ring verformten Eisenplatte, deren Dicke in bezug auf den Magnetfluß ausgelegt ist. Derartige Rückschlußringe erfordern in jedem Fall Verformungen, die überdies maßgenau auszuführen sind, damit die Toleranzen des Luftspaltes zwischen dem Rotor und dem Magneten in den zulässigen Grenzen gehalten werden können. Aus dem gleichen Grund ist es erforderlich, auch die Magnete maßhaltig zu fertigen. Da sich bei einem derartigen Motoraufbau die Toleranzen von außen nach innen addieren und sich auf den Luftspalt zwischen Rotor und Magneten auswirken, erfordert sowohl die Fertigung als auch die Montage eine hohe Präzision, wozu wirtschaftlich aufwendige Bearbeitungs- und Montagevorgänge erforderlich sind.

Die Aufgabe der vorliegenden Erfindung besteht darin, einen einfachen und wirtschaftlichen Aufbau eines gattungsgemäßen Elektromotors zu schaffen, bei dem der Luftspalt zwischen Magneten und Rotor exakt gewählt werden kann und unvermeidliche Fertigungstoleranzen ohne Auswirkung auf den Luftspalt bleiben.

Diese Aufgabe ist erfindungsgemäß dadurch gelöst, daß der Rückschlußring aus magnetflußleitendem Strangmaterial in wenigstens zwei Windungen um die Magnete gewickelt ist. Dadurch lassen sich die Magnete über seitlich angeordnete Distanzhalter in bestimmtem Abstand zueinander anordnen und durch die Umwicklungen des Strangmateriales in bestimmtem Abstand zueinander plazieren, wobei das gewickelte Strangmaterial gleichzeitig als Rückschlußring dient. Dabei ist die Bildung des Rückschlußringes aus übereinandergewickeltem Strangmaterial keinesfalls auf solche Elektromotoren beschränkt, bei denen Permanentmagnete eingesetzt und die als Gleichstrom-Nebenschlußmotoren ausgebildet sind. Statt der Permanentmagnete könnten auch Elektromagnete eingesetzt werden, und ein aus Strangmaterial gewickelter Rückschlußring läßt sich überall dort einsetzen, wo eben ein Rückschlußring bei Elektromotoren Verwendung finden kann. Je nach Stärke des Strangmateriales läßt sich ein Rückschlußring auch aus mehr als zwei Windungen bilden, wobei so viele Windungen übereinandergewickelt werden können, bis der Rückschlußring die gewünschte Gesamtstärke aufweist. Ein derartiger, aus mehreren Windungen gebildeter Rückschlußring vermag mehrere Funktionen zu erfüllen. Abgesehen von seiner eigentlichen Bestimmung, den Rückschluß zu erstellen, dient ein derartig gewickelter Rückschlußring auch der Systembefestigung am Motorrahmen, und insbesondere läßt sich dadurch der Luftspalt zwischen den Magneten und dem Rotor exakt definieren, da durch die Umwicklung Formabweichungen ausgeglichen werden können. Dabei mag zur Bildung des gewickelten Rückschlußringes vorteilhaft als Strangmaterial dünnwandiges Eisenband mit rechteckigem Querschnitt Verwendung finden, dessen Breite etwa mit der Breite der Magnete übereinstimmt. Die Befestigung der äußeren Windungslage an der vorhergehenden Windungslage des Rückschlußringes kann in beliebiger Weise erfolgen, ohne daß eine galvanische Verbindung erforderlich wäre.

Statt einer Endverbindung des Wickelendes mit der darunterliegenden Wicklung ist es auch denkbar, das Eisenband mit einer die Windungen zusammenhaltenden Profilierung zu versehen. Diese Profilierung mag beispielsweise auch der axialen Fixierung der Magnete im Rückschlußring
dienen, jedoch mag es vorteilhaft sein, wenn das Eisenband an seinen beiden Rändern die axiale Halterung der
Magnete übernehmende Abwinklungen aufweist.

Wie bereits erwähnt, mögen zur Fixierung der Magnete
zueinander seitlich neben dem Rotor angeordnete Distanzstücke dienen, wobei als Distanzstücke vorteilhaft hutprofilartige, etwa der Breite der Magnete entsprechende
Stabstücke verwendet werden können. Derartige Distanzstücke lassen sich auch als einstückige Bestandteile
der ersten Windung des den Rückschlußring bildenden
Strangmaterials ausbilden.

In vielen Fällen mag es auch vorteilhaft sein, daß Strangmaterial in Teilstränge zu unterteilen, die nebeneinander
und übereinander um die Magnete gewickelt sind. Dabei
können die Teilstränge einerseits einen runden Querschnitt
und andererseits im Bedarfsfall auch einen unrunden
Querschnitt aufweisen.

Um Zu vermeiden, daß insbesondere Teilstränge mit runden
Querschnitten von den Magneten abrutschen, ist es nach
einem weiteren Ausgestaltungsmerkmal der Erfindung vorteilhaft, wenn die Teilstränge durch seitliche Begrenzungswandungen an den Magneten lagegesichert sind. Dabei
lassen sich als Begrenzungswandungen separate Seitenteile einsetzen, die mit dem Magneten verbindbar sind.
Es mag jedoch auch vorteilhaft sein, wenn die Begrenzungswandungen einstückige Teile des Magneten darstellen. Derartige Begrenzungswandungen könnten beispielsweise
gebildet sein, indem die äußere Mantelfläche der Magnete
in ihrem mittleren Längenbereich eingetieft sind, was
beispielsweise durch spanende Verformung oder aber bei der Sinterung der Magnete in der Form erzeugt werden kann.

Vorteilhaft lassen sich zur radialen Abstandhaltung der Magnete als Distanzstücke die Seitenwangen eines den Rotor lagernden Motorrahmens unmittelbar verwenden.

Zur Fertigung von in großer Stückzahl herzustellenden Elektromotoren ist es bekannt, ein Montageband zu verwenden, dem zunächst der Motorrahmen zugeführt wird, in den in einem weiteren Montageschritt unter Verwendung von Lagermitteln ein Rotor eingesetzt wird, wobei diese Lagermittel in einer nächsten Montagestufe durch Haltemittel festgelegt werden, wonach in weiteren Montageschritten Kohlebürsten mit ihren Haltern am Motorrahmen befestigt werden und der Motor schließlich in weiteren Montagestufen mit einer Anschlußbrücke zur Aufnahme von Abtriebselementen bestückt wird. Unter Bildung eines gewickelten Rückschlußringes ist es nunmehr möglich, zwischen die vorgenannten Montageschritte eine Montagestation zur Anordnung von Magnetschalen zu schalten, deren diese umfassende Rückschlußring durch Umwickeln der Magnetschalen und der diese auf Abstand haltende Motorrahmenträger in einer weiteren Montagestation gebildet sind. Diese Herstellungsmethode erleichtert die Montage wesentlich, da die zuzuführenden Bauteile außer der unteren Magnetschale nur von einer Seite, vorzugsweise der Oberseite her, montiert zu werden brauchen und insbesondere eine Vormontage des Stators entfällt. Die Montageschritte selbst sind einfach und überschaubar und stellen keine hohen Anforderungen an die Geschicklichkeit der mit der Montage betrauten Person.

Die Erfindung ist in Ausführungsbeispielen auf der Zeichnung dargestellt und wird nachfolgend näher erläutert. Es zeigen:

Fig. 1 einen Stator gemäß der Erfindung, in Richtung seiner Längsachse gesehen, dessen beide Permanentmagnete einerseits durch Distanzstücke auf Abstand gehalten und andererseits mit einem Eisenband umwickelt sind,

Fig. 2 zwei einander gegenüberliegend durch Klemmbacken gehaltene Permanentmagnete zu Beginn des Wickelvorganges,

Fig. 3 einen erfindungsgemäßen Elektromotor in einer Seitenansicht mit einem den Rotor und den Stator halternden Motorrahmen, der an einem Tragrahmen gegebenenfalls Schalter, Dioden und Entstörmittel aufnimmt,

Fig. 4 einen Querschnitt durch den Motorteil gemäß der Schnittlinie IV-IV von Fig. 3,

Fig. 4a den in Fig. 4 dargestellten Querschnitt durch eine Seite des Stators in vergrößertem Maßstab,

Fig. 5 den Stator mit dem angedeuteten Rotor in einem Längsschnitt nach der Linie V-V von Fig. 4,

Fig. 6    einen Stator analog der Fig. 5, bei
dem jedoch die Magnete mit Begrenzungswandungen darstellenden Seitenteilen
verbunden sind,

Fig. 7    ein weiteres Ausführungsbeispiel eines
Stators, bei welchem die Begrenzungswandungen einstückige Teile eines
jeden Magneten sind,

Fig. 8    ein weiteres Ausführungsbeispiel eines
Stators in einem Querschnitt, bei dem
vier Magnete, d.h. zwei Polpaare Verwendung finden, die durch Seitenträger
des Motortragrahmens und durch ein
Abschlußdistanzstück auf Abstand gehalten werden,

Fig. 9a   eine Ausführungsform der Seitenträger
des Motorrahmens im Querschnitt nach
der Einzelheit IX-IX von Fig. 8,

Fig. 9b   ein weiteres Ausführungsbeispiel des
Querschnitts eines Seitenträgers des
Motorrahmens zur Abstandhaltung der
Magnete,

Fig. 10   ein oberes Abschlußdistanzstück in
perspektivischer Ansicht zur Anordnung zwischen zwei Magneten,

Fig. 11   ein weiteres Ausführungsbeispiel eines
Distanzstücks in perspektivischer Ansicht,
welches als Begrenzungswandungen dienende
Seitenringe aufweist,

-8-

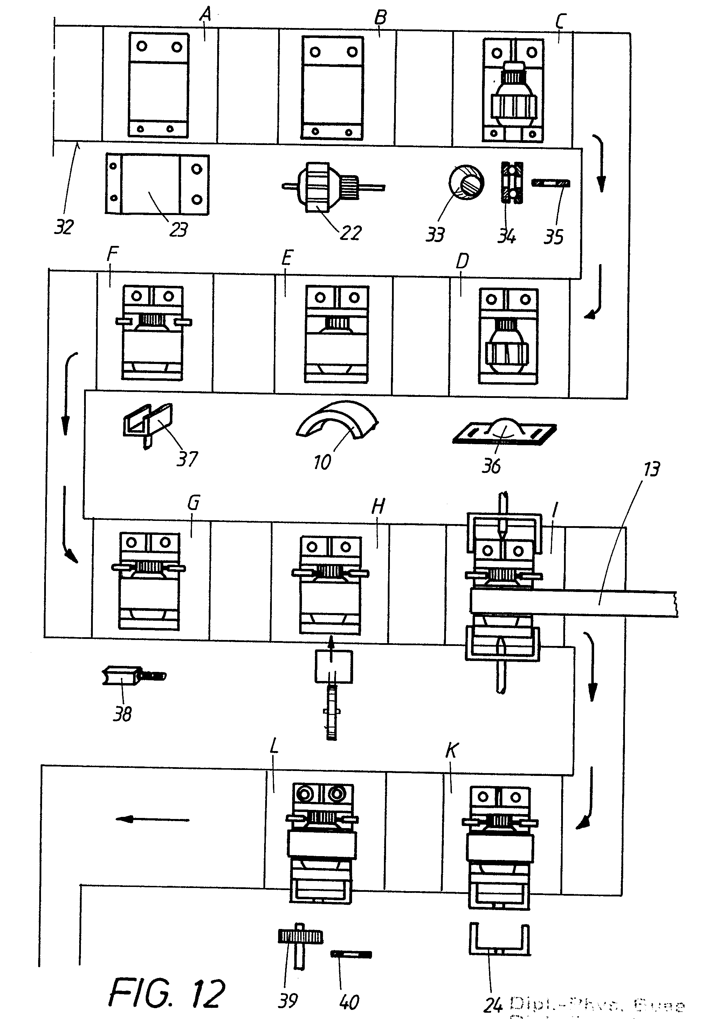

Fig. 12 ein Montageschema des erfindungsgemäßen Elektromotors.

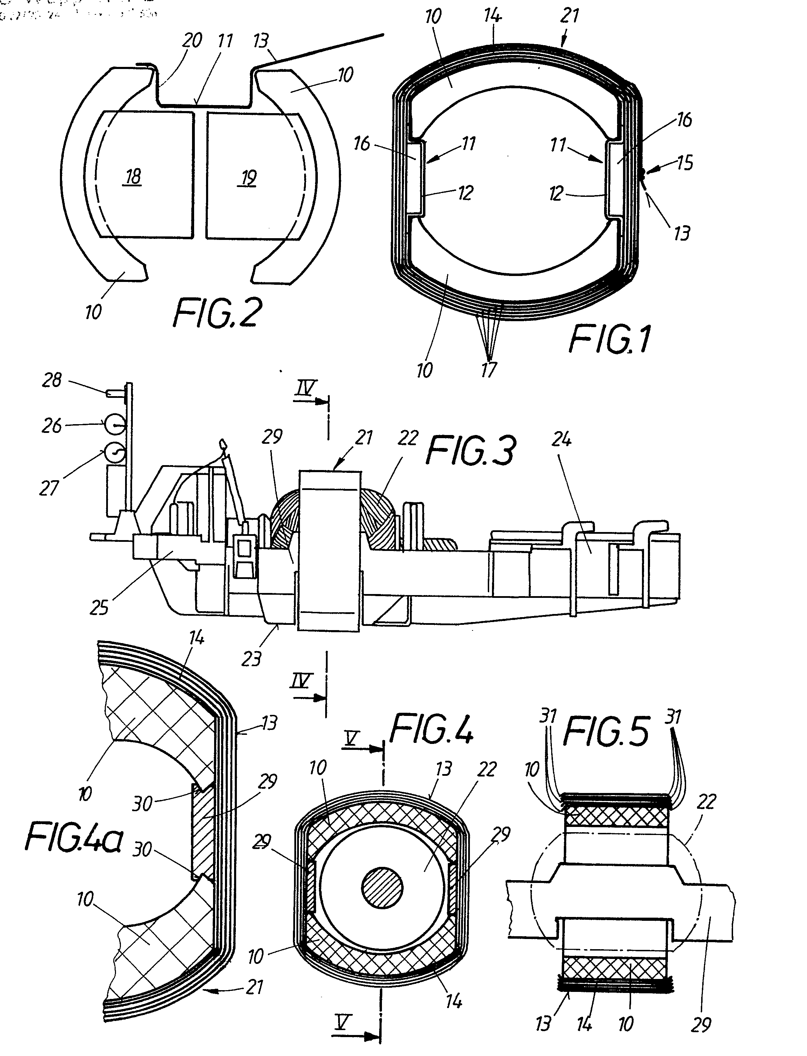

Der aus Fig. 1 ersichtliche Stator des erfindungsgemäßen Elektromotors weist zwei einander gegenüberliegend angeordnete Permanentmagnete 10 auf, die durch Distanzstücke 11 in bestimmtem radialen Abstand zueinander gehalten sind. Diese Distanzstücke 11 bestehen bei dem aus Fig. 1 ersichtlichen Ausführungsbeispiel aus dünnwandigen hutprofilartigen Stabstücken 12, deren Länge etwa der Breite der Permanentmagnete 10 entspricht. Die auf Abstand zueinander angeordneten Permanentmagnete 10 sind mit einem magnetflußleitenden Strangmaterial 13 umwickelt, das beispielsweise aus einem dünnwandigen, mit der Breite der Magnete 10 etwa übereinstimmenden Eisenband besteht. Dieses Eisenband ist in mehreren Windungen 17 übereinandergewickelt und bildet einen Rückschlußring 14 von für den Magnetfluß erforderlicher Dicke. Das Ende des Eisenbandes mag an der Verbindungsstelle 15 durch eine Heftschweißung mit der Vorwindung des Eisenbandes fest verbunden sein. Der durch die Hutform des Stabstückes 12 gebildete Hohlraum zwischen diesem Distanzstück 11 und der inneren Wandwindung mag als Aufnahmeraum 16 für einen nicht dargestellten Haltebügel od.dgl. zur Verbindung mit dem Motorrahmen dienen.

In Fig. 2 ist dargestellt, wie zur Wicklung des Rückschlußringes die Permanentmagnete 10 durch einen aus den Klemmbacken 18 und 19 gebildeten Wickeldorn auf Abstand gehalten werden, wobei als Distanzstücke 11 zwischen den Permanentmagneten rinnenförmige Eindrückungen 20 in der ersten Windung des Eisenbandes 13 dienen. Dabei versteht es sich jedoch, daß das Eisenband in diesem Fall eine solche Stärke aufweisen muß, daß die durch Eindrückungen gebildeten Distanzstücke eine genügende Stabilität besitzen. Die Magnete 10 bilden zusammen mit den Distanzstücken 11 und dem Rückschlußring 14 den Stator 21.

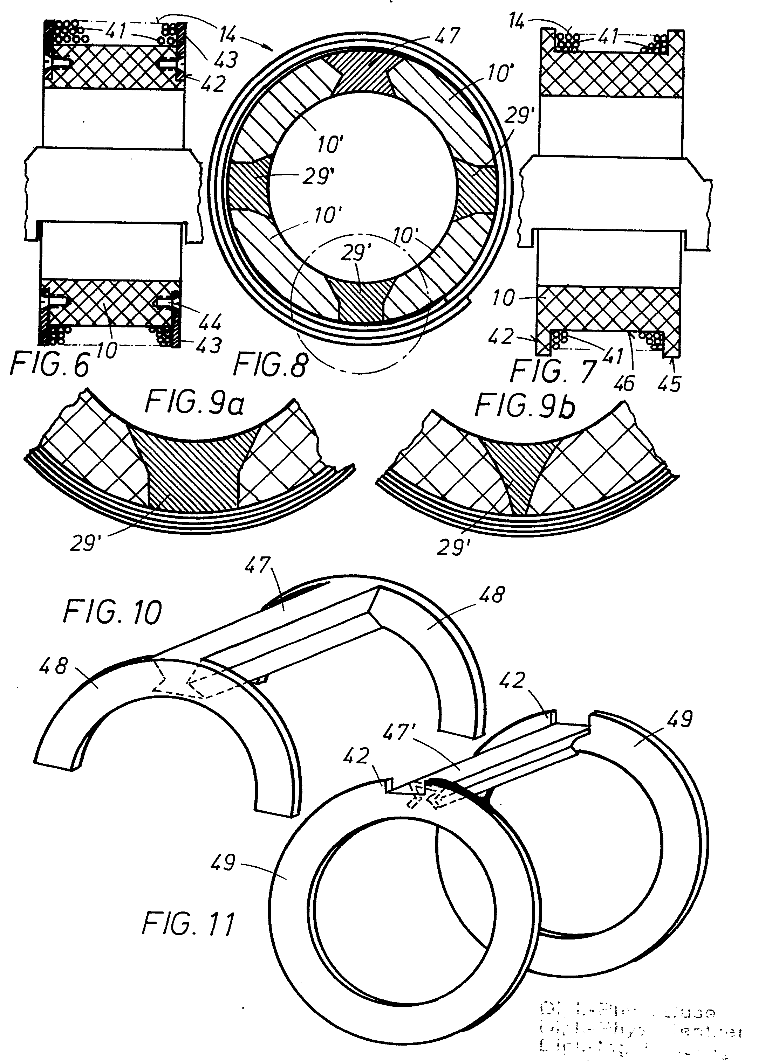

Der aus Fig. 3 ersichtliche Elektromotor ist mit seinem Rotor 22 in einem Motorrahmen 23 gelagert, der einerends eine Anschlußbrücke 24 zur Aufnahme nicht dargestellter Abtriebsmittel und andernends einen Tragrahmen 25 zur Aufnahme von beispielsweise Dioden 26, Entstörmitteln 27, Schaltern 28 u.dgl. aufweisen mag. Beiderseits des Rotors 22 weist der Motorrahmen 23 Seitenträger 29 auf, auf denen sich im mittleren Bereich des Rotors 22 zwei einander gegenüberliegende Permanentmagnete 10 abstützen (Fig. 4 und 4a). Dabei mögen die Seitenträger 29 an ihren Aufnahmestellen für die Permanentmagnete 10 Längsnuten 30 aufweisen, in welchen Stützflächen der Permanentmagnete 10 formschlüssig aufgenommen werden können. Die Permanentmagnete 10 und die Seitenträger 29 sind mit einem Eisenband 13 in mehreren Windungen umwickelt, wodurch außer der Erzeugung des Rückschlußringes 14 auch der feste Verbund der Permanentmagnete 10 mit dem Motorrahmen 23 erzielt ist. Um die Permanentmagnete außer in radialer Richtung auch in axialer Richtung festzulegen, ist das Eisenband an seinen beiden Längsseiten mit jeweils einer Abwinklung 31 versehen, die den Permanentmagneten 10 seitlich übergreifen, wie dies inbesondere aus Fig. 5 zu entnehmen ist.

Die dargestellten Ausführungsbeispiele gemäß den Fig. 1 bis 7 zeigen Ausführungsformen eines Stators, bei denen zwei einander gegenüberliegende Permanentmagnete eingesetzt sind. Statt der Verwendung des zuvor beschriebenen, rechteckförmigen Eisenbandes als Strangmaterial zur Bildung des Rückschlußringes 14 lassen sich beispielsweise auch Teilstränge 41 verwenden, die beispielsweise aus Draht bestehen können, der entweder einen runden oder auch einen unrunden Querschnitt aufweisen kann. Um zu verhindern, daß die Teilstränge 41 aus beispielsweise Draht mit rundem Querschnitt vom Außenmantel der Magnete 10 abrutschen können, sind diese Magnete an ihren Stirnseiten mit deren Außenmantel radial überragenden Begrenzungswandungen 42 versehen, die als separate, scheibenförmige Seitenteile 43 mit den Stirnseiten der Magnete 10 verbunden sind, wobei die Verbindung auf verschiedene Weise erfolgen kann und in Fig. 6 nur beispielsweise durch Senkkopfschrauben 44 gebildet sein kann. Es ist jedoch auch denkbar, die Begrenzungswandungen 42 dadurch zu bilden, daß gegenüber deren Außenmantel 45 die Umfangsfläche der Magnete im mittleren Bereich zurückspringt, so daß die Begrenzungswandungen 42 einstückige Teile des Magneten 10 sind.

Es ist jedoch auch denkbar, die Polpaarzahl zu erhöhen und zur Bildung leistungsfähigerer Motoren bei gleichem Gewicht bzw. leistungsgleichen Motoren bei niedrigerem Gewicht und auch geringeren Abmessungen mehrere Magnetpaare über den Umfang des Rotors verteilt anzuordnen und diese Magnete mit dem gewickelten Rückschlußring 14 zu umfassen. In Fig. 8 ist ein Ausführungsbeispiel dargestellt, bei dem vier Permanentmagnete 10' verwendet werden, die unterseitig und rechts und links von Seitenträgern 29' des Motorrahmens 23 auf Abstand gehalten werden, während im oberen Bereich zur Abstandhaltung der Magnete 10' ein Distanzstück 47 angeordnet ist. Dabei kann die Form des Querschnitts der Seitenträger 29' zur Abstandhaltung der Magnete 10' unterschiedlich gestaltet sein, wie dies in den Fig. 9a und 9b nun beispielsweise dargestellt ist. Als Distanzstück 47 im oberen Bereich zwischen den Permanentmagneten 10' kann ein Bauteil Verwendung finden, wie es beispielsweise in Fig. 10 dargestellt ist. Dieses Distanzstück 47' mag aus einem Druckguß gefertigt sein und zur Axialbegrenzung der oberen Magnete 10' stirnseitig Segmentstücke 48 aufweisen, durch welche die Magnete 10' stirnseitig bereichsweise übergriffen sind. Dabei findet das Distanzstück 47 vorzugsweise überall dort Anwendung, wo der Rückschlußring 14 aus rechteckförmigem, die gesamte Breite der Magnete überdeckendem Eisenband 13 besteht. Das aus Fig. 11 ersichtliche Distanzstück 47' weist stirnseitig Ringe 49 auf, deren Außendurchmesser größer ist als der Außendurchmesser der zu einem Ring zusammengefügten Magnete 10', so daß der Überstand der Ringe 49 als Begrenzungswandung 42 dienen mag, wenn der Rückschlußring aus drahtförmigen Teilsträngen 41 gewikkelt ist. Es ist natürlich möglich, auch das aus Fig. 11 ersichtliche Distanzstück 47' aus Druckguß herzustellen. Jedoch läßt sich dieses Distanzstück 47', wie in Fig. 11 dargestellt, vorteilhaft als flächiges Stanzteil ausbilden, das zu einem aus Fig. 11 ersichtlichen Gebilde verformt werden kann. Es versteht sich, daß auch das aus Fig. 10 ersichtliche Distanzstück 47 statt aus Druckguß aus einem flächigen Stanzteil mit nachfolgender Verformung gebildet sein kann. Des weiteren ist es denkbar, die Polpaarzahl weiterhin zu erhöhen und statt vier Magnete 10' auch noch mehr Magnete anzuordnen. Außerdem versteht es sich, daß außer den Permanentmagneten auch Elektromagnete eingesetzt werden können.

Die Herstellung eines Fig. 3 analogen Elektromotors als Massenartikel kann mittels eines Montagebandes 32 erfolgen, wie es beispielsweise in Fig. 6 mit den einzelnen Montagestufen schematisch dargestellt ist. Zunächst wird dem Montageband in der Montagestufe A der Motorrahmen 23 zugeführt, welchem in der Montagestufe B der Rotor 22 zugegeben wird. Dieser Rotor wird in der Montagestufe C unter Hinzufügung kugeliger Gleitlager 33, Axiallager 34 und Scheiben 35 im Motorrahmen 23 gelagert, wobei in der nachfolgenden Montagestufe D die Lagerung durch Kalottenhaltebleche 36 gesichert wird. In der nachfolgenden Montagestufe E werden die Magnetschalen 10 um den Rotor 22 plaziert. Die Kohlebürstenköcher 37 werden im Montageschritt F im Bereich des Rotorkollektors in den Motorrahmen 23 eingesetzt, um dann in der nachfolgenden Montagestufe G die mit einer Druckfeder versehenen Kohlebürsten 38 aufzunehmen. Die Lagesicherung der Kohlebürsten 38 am Motorrahmen 23 erfolgt dann in der Montagestufe H, indem dort der Köcher für die Kohlebürsten verschlossen wird. Der Rückschlußring 14 wird schließlich in der Montagestufe I an gebracht, indem der Motorrahmen mit den bisher montierten Teilen zwischen Spitzen einer Wickelvorrichtung aufgenommen wird, mit deren Hilfe das von einem Coil gegebenenfalls unter Zwischenschaltung von Profilierungsrollen abgewickelte Eisenband 13 um die Magnetschalen 10 unter Einschluß des Motorrahmens 23 gewickelt wird. Die nachfolgenden Montagestufen K und L dienen der Komplettierung des Motors, indem dort einerseits Anschlußbrücken 24 und 25 angebracht werden, die der Aufnahme von Abtriebselementen 39 und 40 dienen. Schließlich erfolgt in nicht weiter dargestellten Montagestufen noch die Hinzufügung von Steuer- und Entstörmitteln, wonach sich noch eine Teststrecke an den Montageabschnitt anschließt.

Wie bereits erwähnt, geben die dargestellten und vorbeschriebenen Ausführungen den Erfindungsgegenstand nur beispielsweise wieder, der keinesfalls allein darauf beschränkt ist. Es sind vielmehr noch mancherlei Änderungen und andere Ausgestaltungen der Erfindung denkbar. Es ist beispielsweise möglich, bei der Verwendung von Dauermagneten bereits magnetisierte Magnetschalen zu montieren. Statt dessen kann die Magnetisierung der Magnetschalen auch später über den Rotor in an sich bekannter Weise erfolgen.

## PATENTANWÄLTE

0179963

zugelassene Vertreter beim Europäischen Patentamt

# DIPL.- PHYS. BUSE · DIPL.- PHYS. MENTZEL · DIPL.-ING. LUDEWIG

Unterdörnen 114 · Postfach 20 02 10 · 5600 Wuppertal 2 · Fernruf (02 02) 55 70 22/23/24 · Telex 8 591 606 wpat

37

**5600 Wuppertal 2, den**

Kennwort: "Rückschlußwickel"

Robert Krups Stiftung & Co. KG,
Heresbachstr. 29, 5650 Solingen 19

---

B e z u g s z e i c h e n l i s t e :

---

| | | | | |
|---|---|---|---|---|
| 10 | Permanentmagnet | | 32 | Montageband |
| 10' | Permanentmagnet | | 33 | Gleitlager |
| 11 | Distanzstück | | 34 | Axiallager |
| 12 | Stabstück | | 35 | Scheiben |
| 13 | Strangmaterial/Eisenband | | 36 | Kalottenhalteblech |
| 14 | Rückschlußring | | 37 | Kohlebürstenköcher |
| 15 | Verbindungsstelle | | 38 | Kohlebürste |
| 16 | Aufnahmeraum | | 39 | Abtriebselement |
| 17 | Windung | | 40 | Abtriebselement |
| 18 | Klemmbacke | | 41 | Teilstrang/Draht |
| 19 | Klemmbacke | | 42 | Begrenzungswandung |
| 21 | Eindrückung | | 43 | Seitenteil |
| 20 | Stator | | 44 | Senkkopfschraube |
| 22 | Rotor | | 45 | Außenmantel |
| 23 | Motorrahmen | | 46 | Umfangsfläche |
| 24 | Anschlußbrücke | | 47 | Distanzstück |
| 25 | Tragrahmen | | 47' | Distanzstück |
| 26 | Diode | | 48 | Segmentstück |
| 27 | Entstörmittel | | 49 | Ring |
| 28 | Schalter | | | |
| 29 | Seitenträger | | | |
| 29' | Seitenträger | | | |
| 30 | Längnut | | | |
| 31 | Abwinklung | | | |

0179963

**PATENTANWÄLTE**
zugelassene Vertreter beim Europäischen Patentamt

**DIPL.- PHYS. BUSE · DIPL.- PHYS. MENTZEL · DIPL.-ING. LUDEWI**
Unterdörnen 114 · Postfach 200210 · 5600 Wuppertal 2 · Fernruf (0202) 557022/23/24 · Telex 8591606 w|

37                                 **5600 Wuppertal 2, den**

Kennwort: "Rückschlußwickel"

Robert Krups Stiftung & Co. KG,
Heresbachstr. 29, 5650 Solingen

---

A n s p r ü c h e :

---

1.) Elektromotor zum Antrieb von Geräten, insbesondere von Haushaltgeräten, wobei der Rotor des Motors von wenigstens zwei gegenüberliegend angeordneten Magneten unterschliedlicher Polarität umfaßt ist und die Magnete ihrerseits an der Innenseite eines Rückschlußringes anliegen, dessen Dicke in bezug auf den Magnetfluß ausgelegt ist,

d a d u r c h   g e k e n n z e i c h n e t ,

daß der Rückschlußring (14) aus magnetflußleitendem Strangmaterial (13) in wenigstens zwei Windungen (17) um die Magnete (10) gewickelt ist.

2.) Elektromotor nach Anspruch 1, dadurch gekennzeichnet, daß als Strangmaterial dünnwandiges Eisenband (13) mit rechteckigem Querschnitt Verwendung findet, dessen Breite mit der Breite der Magnete etwa übereinstimmt.

- 2 -

3.) Elektromotor nach Anspruch 2, dadurch gekennzeichnet, daß das Eisenband (13) mit einer die Windungen (17) zusammenhaltenden Profilierung versehen ist.

4.) Elektromotor nach einem oder mehreren der vorhergehenden Ansprüche, dadurch gekennzeichnet, daß das Eisenband (13) an seinen beiden Rändern die axiale Halterung der Magnete (10) übernehmende Abwinklungen (31) aufweist.

5.) Elektromotor nach Anspruch 1, dadurch gekennzeichnet, daß das Strangmaterial (13) in Teilstränge (41) unterteilt ist, die nebeneinander und übereinander um die Magnete (10) gewickelt sind.

6.) Elektromotor nach Anspruch 5, dadurch gekennzeichnet, daß die Teilstränge (41) einen runden Querschnitt aufweisen.

7.) Elektromotor nach Anspruch 5, dadurch gekennzeichnet, daß die Teilstränge (41) einen unrunden Querschnitt aufweisen.

8.) Elektromotor nach den Ansprüchen 5 bis 7, dadurch gekennzeichnet, daß die Teilstränge (41) durch Begrenzungswandungen (42) lagegesichert sind.

9.) Elektromotor nach Anspruch 8, dadurch gekennzeichnet, daß die Begrenzungswandungen (42) Teile der Magnete (10) sind.

10.) Elektromotor nach einem oder mehreren der vorhergehenden Ansprüche, dadurch gekennzeichnet, daß die Magnete (10) durch seitlich neben dem Rotor (22) angeordnete Distanzstücke (11) in radialer
Richtung auf Abstand zueinander gehalten sind.

11.) Elektromotor nach Anspruch 10, dadurch gekennzeichnet, daß die Distanzstücke (11) hutprofilartige,
etwa der Breite der Magnete (10) entsprechende
Stabstücke (12) sind.

12.) Elektromotor nach Anspruch 11, dadurch gekennzeichnet, daß die hutprofilartigen Distanzstücke
(11) einstückige Bestandteile der ersten Windung
(17) des den Rückschlußring (14) bildenden Strangmaterials sind.

13.) Elektromotor nach Anspruch 10, dadurch gekennzeichnet,
daß die Distanzstücke (11) durch Seitenträger (29)
eines den Rotor (22) lagernden Motorrahmens (23)
gebildet sind.

14.) Verfahren zur Herstellung eines Elektromotors
mittels eines Montagebandes, dem zunächst der
Motorrahmen zugeführt wird, in den in einem weiteren
Montageschritt unter Verwendung von Lagermitteln
ein Rotor eingesetzt wird und die Lagermittel in
einer nächsten Montagestufe mittels Haltemitteln
festgelegt werden, wonach in weiteren Montageschritten Kohlebürsten mit ihren Haltern am Motorrahmen befestigt werden und der Motor schließlich
in weiteren Montagestufen mit einer Anschlußbrücke
zur Aufnahme von Abtriebselementen bestückt wird,
d a d u r c h   g e k e n n z e i c h n e t,
daß zwischen die Montageschritte eine Montagestation
zur Anordnung von Magnetschalen (10) geschaltet ist,
deren diese umfassender Rückschlußring (14) durch Umwickeln der Magnetschalen (10) und der diese auf
Abstand haltenden Motorrahmenträger (29) in einer
weiteren Montagestation gebildet ist.

**FIG.2**

**FIG.1**

**FIG.3**

**FIG.4**

**FIG.4a**

**FIG.5**

0179963

FIG.6

FIG.8

FIG. 7

FIG.9a

FIG.9b

FIG. 10

FIG. 11

0179963

3/3

A    B    C

32    23    22    33    34    35

F    E    D

37    10    36

13

G    H    I

38

L    K

FIG. 12    39    40    24

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 503 227 (PIKAZ) <br><br> * Seite 3, Zeile 14 - Seite 4, Zeile 14; Figuren 1-5 * | 1,2,5-8,11, 13,14 | H 02 K 1/14 <br> H 02 K 1/18 <br> H 02 K 23/04 |
| X | DE-B-1 147 674 (LICENTIA) <br><br> * Spalte 3, Zeilen 40-55; Spalte 4, Zeilen 5-9; Figuren 1,2,4 * | 1,6,10 ,11,13 ,14 | |
| A | GB-A- 504 800 (RAWLINGS) <br> * Seite 3, Zeilen 71-96; Figuren 7,8 * | 3,4 | |
| A | FR-A-2 518 840 (MITSUBISHI DENKI) <br> * Seite 2, Zeile 26 - Seite 4, Zeile 24; Figuren 2-4 * | 8,9 | **RECHERCHIERTE SACHGEBIETE (Int. Cl.4)** |
| A | FR-A-1 453 957 (KIRSCH) <br> * Seite 4, linke Spalte, Zeilen 25-37; Figuren 15,16 * | 11,12 | H 02 K |

Der vorliegende Recherchenbericht wurde für alle Patentansprüche erstellt.

| Recherchenort <br> DEN HAAG | Abschlußdatum der Recherche <br> 10-06-1985 | Prüfer <br> TIO K.H. |
|---|---|---|